Europäisches Patentamt

European Patent Office

Office européen des brevets

(19)

(11) **EP 1 154 958 B1**

(12) **FASCICULE DE BREVET EUROPEEN**

(45) Date de publication et mention
de la délivrance du brevet:
**31.03.2004 Bulletin 2004/14**

(51) Int Cl.7: **C02F 11/14**, C02F 1/54,
C02F 1/52

(21) Numéro de dépôt: **00902507.3**

(22) Date de dépôt: **03.02.2000**

(86) Numéro de dépôt international:
**PCT/BE2000/000014**

(87) Numéro de publication internationale:
**WO 2000/047527 (17.08.2000 Gazette 2000/33)**

(54) **PROCEDE DE CONDITIONNEMENT DE BOUES**

VERFAHREN ZUM KONDITIONIEREN VON SCHLÄMMEN

METHOD FOR CONDITIONING SLUDGE

(84) Etats contractants désignés:
**AT BE CH CY DE DK ES FI FR GB GR IE IT LI LU
MC NL PT SE**
Etats d'extension désignés:
**RO**

(30) Priorité: **08.02.1999 BE 9900084**

(43) Date de publication de la demande:
**21.11.2001 Bulletin 2001/47**

(73) Titulaire: **S.A. LHOIST RECHERCHE ET
DEVELOPPEMENT
1342 Ottignies-Louvain-La-Neuve (BE)**

(72) Inventeurs:
• **REMY, Marc, Joseph, Henri
B-1435 Mont-Saint-Guibert (BE)**
• **POISSON, Régis
F-92200 Neuilly-sur-Seine (FR)**
• **LANGELIN, Henri, René
F-62132 Caffiers (FR)**
• **JUDENNE, Eric
F-75011 Paris (FR)**

(74) Mandataire: **Claeys, Pierre et al
Gevers & Vander Haeghen,
Intellectual Property House,
Brussels Airport Business Park
Holidaystraat 5
1831 Diegem (BE)**

(56) Documents cités:
**US-A- 2 941 942        US-A- 4 675 114**

• **PATENT ABSTRACTS OF JAPAN vol. 016, no.
213 (C-0942), 20 mai 1992 (1992-05-20) & JP 04
040286 A (KAIYOU SOSEI GIJIYUTSU
KENKIYUUSHIYO:KK), 10 février 1992
(1992-02-10) cité dans la demande**
• **WOLF P ET AL: "VERSUCHE ZUR
KOMBINIERTEN
POLYMER-KALK-KONDITIONIERUNG VOR DER
FAULSCHLAMMENTWAESSERUNG MIT
KAMMERFILTERPRESSEN" KORRESPONDENZ
ABWASSER, vol. 38, no. 6, 1 juin 1991
(1991-06-01), pages 806-810, XP000205402 ISSN:
0341-1540**

# EP 1 154 958 B1

**Description**

La présente invention est relative à un procédé de conditionnement de boues comprenant une addition à celles-ci de chaux, avec augmentation de pH, et d'au moins un composant organique floculant et une floculation des boues.

Par boues, il faut entendre au sens de la présente invention toutes les boues dont le pH est faiblement basique, neutre ou même acide, et de préférence dans la gamme comprise entre 6 et 8. On peut citer par exemple les boues de stations d'épuration urbaines et agroalimentaires, quelle que soit leur classification. On peut aussi envisager des boues de dragage, ainsi que d'autres boues éventuellement plus acides.

Au cours du traitement des eaux résiduaires, les boues sont d'une manière générale tout d'abord décantées et puis épaissies. Ensuite on les soumet à une floculation, suivie d'une déshydratation, en vue d'obtenir une boue déshydratée beaucoup plus aisée à transporter et à manipuler.

Plusieurs procédés de floculation de boues, de préférence épaissies, sont connus. Ils font tous appel à un agent floculant. Parmi ces procédés, on peut en citer en particulier quatre faisant usage, comme agent floculant, respectivement d'un mélange de sels de fer et de chaux, d'un mélange de sel d'Al et de chaux, d'un polyélectrolyte organique, et d'un polyélectrolyte organique associé à des sels de Fe ou d'Al.

Les inconvénients de l'utilisation des sels de Fe ou d'Al associés à de la chaux résident dans une augmentation importante de la quantité de matière sèche (+50-60 %) de la boue à floculer, par rapport à une augmentation très faible dans le cas de l'utilisation d'un floculant organique (<1 %). Par ailleurs, d'une part les sels de fer et d'aluminium attaquent l'acier inoxydable et presque tous les métaux, d'autre part lorsque ces sels se trouvent sous forme solide ils dégagent des poussières irritantes voire toxiques, leur mise en oeuvre requiert donc des précautions particulières quant au matériel à utiliser et présente un danger pour la santé des opérateurs.

Au contraire de ce que l'on obtient avec du $FeCl_3$ + chaux, l'utilisation d'un floculant organique n'augmente pas la valeur agronomique des boues traitées et les propriétés d'usage (tenue en tas, pelletabilité, épandabilité, ...) ne sont pas bonnes, probablement à cause d'une trop faible teneur en matière sèche de la boue floculée, déshydratée. Les boues, non traitées par de la chaux, contiennent généralement des germes pathogènes et présentent une mauvaise stabilité biologique.

On a cherché à remédier aux inconvénients de ces procédés. On a par exemple prévu de traiter des boues désinfectées par de la chaux à l'aide d'un copolymère déterminé capable de maintenir son effet floculant à un pH de 12 (US-A-4.160.731).

Le procédé décrit dans ce document présente toutefois l'inconvénient d'une addition d'un copolymère tout à fait particulier, et de ce fait coûteux. Il prévoit d'autre part une addition séparée d'abord de chaux, ensuite, quand le pH a atteint sa valeur maximale d'environ 12, de polymère, ce qui impose deux opérations de traitement successives.

D'autre part, il a été prévu depuis un certain temps, d'utiliser pour une floculation des boues conjointement un polymère, comme agent floculant, et un lait de chaux (v. WOLF P. et al, Optimierung der Klärschlammentwässerung mit Kammerfilterpressen durch Polymer - Kalk -Konditionierung, AWT Abwassertechnik Abfailtechnik + Recycling, tome 2, Avril 1993, p. 46-48). Une telle utilisation a pour but de conserver tous les avantages apportés par la chaux, c'est-à-dire une augmentation de la valeur agronomique des boues, des teneurs élevées en matière sèche après déshydratation, de bonnes propriétés d'usage, une hygiénisation de la boue et sa stabilisation biologique. Lorsque la filtration est effectuée au moyen d'un filtre-presse, l'ajout de chaux facilite le débatissage des boues et raccourcit le temps de pressage.

Cette proposition ne semble pas jusqu'à présent avoir été exploitée. En effet si les floculants organiques habituellement utilisés agissent correctement à un pH neutre, ou uniquement faiblement basique, il n'en est pas de même à un pH élevé, tel que celui obtenu lors d'une addition de lait de chaux à la boue à traiter. A un pH basique, ils sont très rapidement dégradés, et de ce fait inefficaces.

Cette dégradation est un phénomène incontrôlable qui engendre, tel qu'on peut l'observer dans les résultats obtenus par Wolf P. et al, les inconvénients suivants :

    i. les teneurs en matière sèche obtenues dans des conditions données ne sont pas reproductibles,

    ii. les teneurs en matière sèche sont dans bien des cas inférieures à celles qui auraient été obtenues si la chaux avait été ajoutée après la déshydratation.

    iii. les teneurs en matière sèche ne peuvent être contrôlées en ajustant le taux de chaulage appliqué à la boue.

D'une manière semblable au procédé de WOLF et al., on prévoit dans la JP-A-04-040286 une application à des boues de pêcheries d'un composé de calcium soluble dans l'eau et, avant ou après cette application, une addition d'un floculant polymère. Seul le pH de la phase aqueuse est pris en considération, en recommandant une neutralisation par un acide de celle-ci après l'addition du composé de calcium basique. Dans tous les exemples donnés, les boues traitées sont au départ fortement basiques et une neutralisation intervient toujours entre l'application du composé de calcium et l'addition du floculant polymère. Les gains en siccité et la valeur agronomique des boues obtenues ne sont pas examinés, alors que ces boues sont amenées à un pH neutre et deviennent donc fortement susceptibles d'être à nouveau contaminées par des bactéries et de dégager de mauvaises odeurs.

La présente invention a pour but de porter remède à ces inconvénients et de mettre au point un procédé de conditionnement de boues permettant l'obtention de boues déshydratées, saines, à qualités d'usage particulièrement bonnes et uniformes et à teneurs en matière sèche élevées, tout en faisant usage des floculants organiques habituellement utilisés pour la floculation des boues.

Pour résoudre ce problème, on a prévu suivant l'invention un procédé tel qu' indiqué dans la revendication 1.

Il est donc apparu qu'il était possible d'une manière inattendue, et cela par un simple contrôle judicieux de l'évolution du pH pendant la floculation, d'obtenir des boues conditionnées présentant toutes les qualités des boues chaulées, tout en maintenant l'usage des floculants organiques habituels, avec des résultats parfaitement répétitifs.

Suivant différents modes de réalisation de l'invention, le procédé comprend une addition de chaux préalablement, simultanément ou après le composant organique floculant. Avantageusement, la chaux ajoutée présente une réactivité donnant lieu, pendant la floculation, à une augmentation de pH à une valeur inférieure à 9.

D'une manière surprenante, il s'est donc avéré que moins la chaux était réactive, plus les résultats de la floculation étaient répétitifs; de plus les teneurs en matière sèche étaient d'autant plus élevées, et surtout de manière également tout à fait répétitive. Sans que le phénomène ne soit totalement compris à l'heure actuelle, l'hypothèse qui prévaut est qu'il est favorable que, au contraire de ce à quoi on aurait pu s'attendre, la chaux soit peu réactive, car de cette manière l'ascension du pH de la boue traitée est fortement ralentie et la floculation induite par le floculant organique usuel peut s'effectuer convenablement malgré la présence de chaux.

On entend par chaux au sens de l'invention une composition répondant à la formule $[xCaO.(1-x)MgO]yH_2O$ où x a une valeur de 0,5 à 1, et y une valeur de 0 à 1, éventuellement additionnée d'au moins un adjuvant. Cette chaux peut se présenter sous forme vive, ou sous forme éteinte pulvérulente ou encore sous forme éteinte en suspension dans une phase aqueuse. La chaux sous forme vive est un produit obtenu par calcination de matériaux calcaire et/ou dolomitique à environ 1000°C et contient de l'oxyde de calcium (CaO) et/ou de la dolomie (CaO.MgO). La chaux sous forme éteinte contient principalement de l'hydroxyde de calcium $Ca(OH)_2$ et/ou de l'hydroxyde mixte $Ca(OH)_2.Mg(OH)_2$ et provient de l'hydratation (ou extinction) de la chaux et/ou dolomie vive. Les laits de chaux et/ou dolomie sont habituellement obtenus soit par hydratation de chaux vive et/ou de dolomie en présence d'un excès d'eau, soit par mise en suspension de chaux sous forme éteinte dans de l'eau.

La réactivité d'une chaux s'évalue de façon différente suivant que la chaux est vive ou éteinte. La réactivité d'une chaux vive s'évalue communément au moyen du T60, paramètre qui correspond au temps nécessaire à l'élévation de la température du système chaux/eau d'extinction jusqu'à 60°C, l'extinction de la chaux étant conduite suivant le protocole décrit dans la nonne Din 1060 Teil n° 3. Le $\tau_{83}$ est un paramètre utilisé pour évaluer la réactivité des chaux éteintes. Par $\tau_{83}$, il faut entendre le temps nécessaire au passage en solution de 63 % de la chaux mélangée à un volume d'eau dans les conditions suivantes. Un volume de chaux correspondant à un poids de 0,1 g de chaux éteinte est introduit dans 700 ml d'eau. Le mélange est alors agité et maintenu à une température de 25°C et la conductivité enregistrée jusqu'à dissolution complète de la chaux. Il faut savoir que la dissolution de la chaux augmente graduellement la conductivité de la solution et qu'il existe une relation linéaire entre la quantité de chaux dissoute et l'augmentation de conductivité observée. Le $\tau_{83}$ est alors déterminé en évaluant, sur base de l'évolution de la conductivité obtenue, le temps nécessaire à l'obtention de 63 % de la conductivité finale du mélange. Il est important de signaler que plus une chaux passera vite en solution et plus son $\tau_{83}$ sera faible. Ainsi dans te cas des laits de chaux plus ceux-ci seront réactifs et plus leur $\tau_{83}$ sera faible.

De préférence, le temps nécessaire pour atteindre un pH de 9 après l'addition de chaux est d'au moins 20 secondes.

En ce qui concerne les chaux présentant une réactivité ralentie, on peut envisager d'appliquer différents produits.

On peut par exemple prévoir l'application de chaux, qu'elle soit pulvérulente ou en suspension, dont les particules ont un d50 d'au moins 50 μm, en particulier d'au moins environ 100 μm, de préférence d'au moins environ 200 μm, avantageusement d'au moins 400 μm. Par d50 il faut entendre, suivant la présente invention, la dimension de particule au-delà de laquelle la moitié en % (volumique) de la distribution de taille des particules est constituée de particules plus grandes. Par exemple, on peut faire usage, à titre de chaux ajoutée, d'une chaux dépensée. Par chaux défillérisée, il faut entendre une chaux pulvérulente ou en suspension dont on a éliminé les particules fines, de préférence celles ayant une taille inférieure à 200 μm, avantageusement en dessous de 250 μm. On obtient de telles chaux défillérisées par exemple par tamisage, par cyclonage ou par toute méthode appropriée pour éliminer les fines.

D'une manière surprenante, il s'est donc avéré que plus les particules de la chaux appliquée étaient grossières, plus le procédé de floculation se reproduisait de manière favorable.

Suivant un autre mode de réalisation de l'invention, la chaux ajoutée est une chaux vive surcuite, par exemple une chaux présentant un T60 de 10 minutes que l'on peut obtenir auprès de la firme Rheinkalk GmbH, Wülfrath, Allemagne.

Suivant encore une autre forme de réalisation de l'invention, la chaux ajoutée est une chaux vive comprenant un additif fluide présentant un pouvoir d'agglomération des particules les plus fines de la composition. Comme additif fluide de ce genre on peut citer, à titre non limitatif, un composant choisi parmi le groupe comprenant des huiles minérales, des polyoléfines et leurs mélanges.

Suivant une forme de réalisation avantageuse de l'invention, la chaux ajoutée est une chaux vive contenant un agent retardateur d'hydratation. On peut préparer une telle chaux selon l'enseignement par exemple de la WO-98/02391. Comme retardateurs d'hydratation, on peut envisager, à titre non limitatif, un composant choisi parmi le groupe comprenant du glycérol, des glycols, des lignosulfonates, des amines, des polyacrylates, des sulfates de métal alcalin et alcalino-terreux, du gypse, de l'acide sulfurique, de l'acide phosphorique, des carboxylates, du saccharose, et leurs mélanges. On peut aussi prévoir, comme décrit dans la WO-98/02391, l'addition à la chaux vive d'une très petite quantité d'eau seule ou en complément aux additifs précédents, d'une manière contrôlée, de façon à créer une réaction de surface, qui va ralentir la réaction d'extinction ultérieure.

Suivant une forme de réalisation de l'invention, la chaux peut se présenter sous la forme d'une chaux éteinte présentant avantageusement une teneur en matière sèche supérieure à 20 %, de préférence supérieure à 40 %. On peut par exemple utiliser une suspension de $Ca(OH)_2$, telle que décrite par exemple dans le BE-A-1006655.

Suivant une autre forme de réalisation de l'invention, la chaux peut se présenter avantageusement sous la forme d'une chaux éteinte présentant des particules agglomérées. Un tel produit forme ainsi une matière granulaire pulvérulente, aisément transportable et très facile à manipuler. On peut préparer un produit de ce genre par exemple selon un procédé tel que décrit dans le BE-A-1006655 ou encore dans l'exemple 1 donné ci-après. Ce produit d'agglomération peut se présenter sous la forme d'agrégats de microfeuilles d'hydroxyde de calcium.

Suivant encore une autre forme de réalisation de l'invention, la chaux ajoutée est une chaux éteinte additionnée d'un agent ralentisseur d'activité. Comme agents ralentisseur d'activité on peut envisager, à titre non limitatif, un composant choisi parmi le groupe comprenant du glycérol, des glycols, des lignosulfonates, des amines, des polyacrylates, des sulfates de métal alcalin et alcalino-terreux, du gypse, de l'acide sulfurique, de l'acide phosphorique, des carboxylates, du saccharose, et leurs mélanges.

Avantageusement, la chaux éteinte est ajoutée en une quantité fournissant un taux de chaulage d'au moins environ 10 % en poids par rapport à la matière sèche de la boue, de préférence d'au moins environ 20 % en poids; sans que ces limites ne doivent être considérées comme critiques.

De manière non critique, l'addition de la chaux à la boue a lieu avant, pendant et/ou après celle du floculant organique. Le procédé suivant l'invention permet donc aux utilisateurs le choix du moment de l'introduction de la chaux. De préférence, cette addition aura lieu simultanément à l'addition de floculant organique, ce à quoi on pouvait difficilement s'attendre, étant donné les propriétés supposées antagonistes entre la chaux et le floculant. Aucune modification n'est alors à prévoir dans l'appareillage de traitement des boues existant. On peut même prévoir une addition de chaux avant l'introduction d'un floculant organique tout à fait usuel, pour autant que l'addition de ce dernier ait lieu avant qu'une augmentation de pH trop importante ne soit entraînée dans la boue. On peut envisager avantageusement une addition de floculant organique dans un délai ne dépassant pas de 5 minutes l'addition de la totalité de la chaux.

Avantageusement, les boues à traiter ont été préalablement décantées. Ultérieurement à la floculation suivant l'invention on peut prévoir une séparation entre phase solide et phase liquide des boues, par tout moyen approprié courant, par exemple par des bandes filtrantes presseuses, un filtre-presse, des dispositifs de centrifugation, ainsi qu'éventuellement une déshydratation ultérieure.

D'une manière particulièrement favorable, cette séparation a lieu au moment où la floculation est terminée et donc approximativement avant que le pH n'atteigne la valeur provoquant une dégradation du floculant organique. La phase liquide est séparée alors à un pH neutre ou légèrement basique et peut être évacuée sans autre traitement, ou éventuellement après une légère neutralisation. La phase solide au contraire poursuit seule son ascension de pH, de préférence jusqu'à une valeur fortement basique permettant un assainissement des boues traitées.

Comme déjà dit, les floculants organiques à utiliser suivant l'invention pour la floculation ne sont pas critiques, et ils peuvent consister en ceux couramment utilisés dans ce but à l'heure actuelle. Selon les caractéristiques de la boue, on utilisera des floculants organiques non ioniques, anioniques ou cationiques, seuls ou en mélange. On peut envisager en particulier des homopolymères d'acrylamide, ou des copolymères d'acrylamide, par exemple avec un sel d'acide carboxylique ou sulfonique, ou avec de l'acrylate ou du diméthacrylate de diméthylaminoéthyle, du chlorure de diallyldiméthyl-ammonium ou du chlorure d'acrylamidopropyltriméthyl-ammonium.

D'autres détails et particularités du procédé suivant l'invention sont indiqués dans les revendications annexées.

Il faut noter que les boues floculées, déshydratées, obtenues selon le procédé suivant l'invention présentent une teneur en chaux élevée et sont bien désinfectées. Elles peuvent donc favorablement être utilisées pour la valorisation de terres agricoles.

Les boues conditionnées par la mise en oeuvre du procédé suivant l'invention, présentent, après séparation de la phase liquide, un gain en siccité positif par rapport à la teneur en matière sèche introduite dans la boue pendant le conditionnement.

L'invention va à présent être expliquée de manière plus détaillée à l'aide d'exemples donnés à titre illustratif et non limitatif.

Exemple 1 - Préparation de chaux éteinte à faible réactivité à partir de chaux vive

10 g de sulfate de calcium dihydraté ($CaSO_4.2H_2O$) sont mis en solution dans 5 litres d'eau. Ensuite 1 kg de chaux vive présentant un T60, déterminé selon la méthode indiquée ci-dessus, compris entre 1 et 5 minutes est mis en suspension sous agitation dans cette solution. Durant cette opération, communément appelée extinction, la température de la suspension est maintenue inférieure à 30°C. Une fois l'extinction de la chaux terminée, la suspension d'hydroxyde de calcium est filtrée, et on obtient ainsi une chaux éteinte à faible réactivité. Le $\tau_{83}$ de cette chaux éteinte est déterminé comme indiqué ci-dessus, et sa teneur en matière sèche est calculée conformément à Degrémont, Mémento Technique de l'eau, éd. du Cinquantenaire, 9e éd., tome I, p. 370, 1989. La distribution granulométrique est établie au moyen d'un granulomètre Laser Coulter LS 230 et le d50 est déterminé sur base de cette distribution.

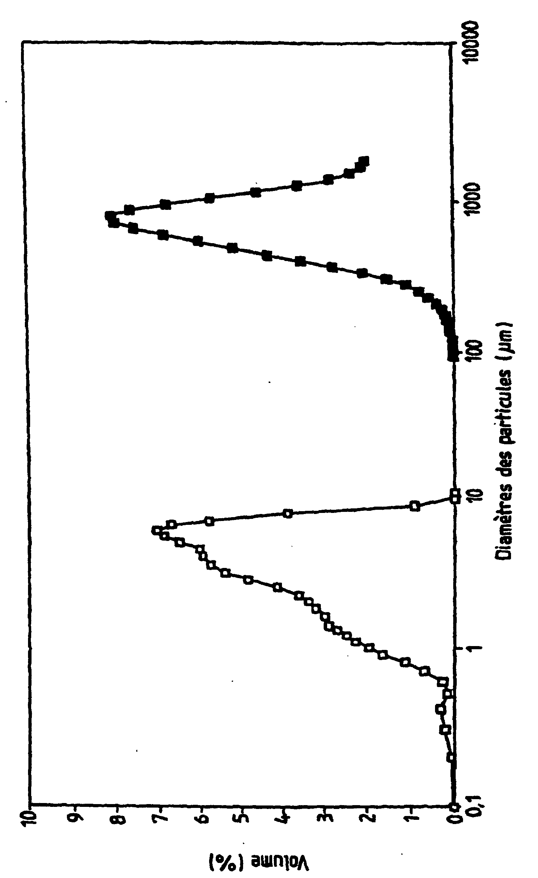

Le $\tau_{83}$ de cette chaux éteinte est de 1010 secondes, sa teneur en matière sèche de 80,5 % et son d50 de 748 μm. La distribution de la taille de ses particules est représentée par des carrés noirs sur la figure annexée.

Exemple 2 - Préparation de chaux éteinte à haute réactivité à partir de chaux éteinte

200 g de $Ca(OH)_2$ micronisé, présentant un d50 d'environ 3 μm, sont versés dans un volume d'un litre d'eau sous agitation. La suspension ainsi obtenue est alors laissée sous agitation pendant 5 minutes. Les mêmes méthodes de mesure que dans l'exemple 1 sont appliquées.

Le $\tau_{83}$ de cet échantillon est de 15 secondes, sa teneur en matière sèche de 25 % et son d50 de 3,3 μm. La distribution de la taille de ses particules est représentée par des carrés blancs sur la figure annexée.

Exemple 3 - Fillration d'une boue conditionnée au moyen d'un floculant organique cationique usuel et de chaux éteinte à faible réactivité, la chaux étant ajoutée après le floculant

On introduit dans un récipient d'un litre une quantité de boue d'épuration épaissie, compondant à 20 g de matière sèche. Cet échantillon de boue est alors traité selon la procédure suivante :

*La préparation de la solution aqueuse de floculant :*

La solution aqueuse de floculant organique cationique (copolymère d'acrylamide) d'une concentration massique de 0,3 % est réalisée en laissant tomber lentement 0,6 g de floculant sous forme de poudre dans 200 ml d'eau contenue dans un récipient en verre de 400 ml. Pendant l'ajout et jusqu'à l'obtention d'un mélange homogène la solution est agitée à l'aide d'un agitateur magnétique.

*La floculation :*

Environ 20 ml de cette solution aqueuse de floculant sont ajoutés au moyen d'une seringue à la boue. Le mélange boue/floculant est alors agité durant environ 6 secondes à une vitesse de 300 tours par minute au moyen d'un floculateur de laboratoire courant.

*Le chaulage :*

On ajoute, 15 à 20 secondes après l'addition du floculant, une quantité de chaux préparée suivant l'exemple 1 à la boue en train de floculer. La quantité de chaux mise en oeuvre est ajustée en vue d'ajouter à la boue un poids de chaux éteinte correspondant à environ 40 % de la matière sèche initiale de la boue. Le mélange ainsi obtenu est agité durant environ 10 secondes à une vitesse d'environ 200 tours par minute au moyen du floculateur de laboratoire. A chaque étape de l'opération de chaulage le récipient est pesé en vue de déterminer de manière précise le taux de chaulage appliqué.

*La filtration :*

L'échantillon ainsi obtenu est introduit dans une cellule de filtration où on laisse la boue s'égoutter pendant environ 4 minutes. On applique ensuite au moyen d'un piston une pression comprise entre 2 et 4 bars sur la boue égouttée pendant le temps nécessaire à l'obtention d'une hauteur de gâteau comprise entre 3 et 5 mm. C'est ce gâteau final qui est prélevé en vue de déterminer la teneur en matière sèche.

Afin de pouvoir évaluer l'influence du chaulage sur la teneur en matière sèche du gâteau de filtration, dans un deuxième essai la même boue épaissie a été floculée et puis filtrée suivant le protocole décrit ci-dessus, mais cette fois l'étape de chaulage n'a pas été réalisée. Une teneur en matière sèche de 16,5 % a été obtenue pour le gâteau de boue non chaulée alors que le gâteau de boue chaulée présentait une teneur en matière sèche de 25,4 %, ce qui représente un gain en siccité d'environ 17,2 % en relatif. Ce gain a été déterminé relativement par rapport à la siccité qui aurait été obtenue si la même quantité de chaux avait été ajoutée après déshydratation à la boue non chaulée (S2*). Cette dernière est calculée au moyen de la formule suivante

$$S2^* = \frac{S1 \times (100 + t)}{100 + (S1 \times (t/100))}$$

où S1 est la teneur en matière sèche du gâteau de boue non chaulée,

t est le taux de chaux éteinte ajoutée exprimé en % massique par rapport à la matière sèche contenue dans la boue épaissie.

La fraction d'eau égouttée ($X_{égout}$) lorsque la boue a été chaulée est de 0,51 alors que dans le cas de la boue non chaulée cette fraction vaut 0,41. Cette fraction est obtenue en divisant le volume d'eau égoutté par le volume total d'eau contenu dans la boue mise en oeuvre lors de l'essai de déshydratation. Par volume d'eau égoutté on entend le volume de filtrat récolté après environ 240 s d'égouttage.

Exemple 4 - Filtration d'une boue conditionnée au moyen d'un floculant organique cationique usuel et d'une série de chaux éteintes à réactivité variable, la chaux étant ajoutée après le floculant

Un ensemble d'essais de filtration de boue d'épuration floculée et chaulée au moyen d'une série de chaux éteintes à réactivité variable a été réalisé suivant la procédure décrite dans l'exemple 3. La série de chaux éteintes a été obtenue en séparant par tamisage en différentes fractions granulométriques une chaux éteinte obtenue selon l'exemple 1. Les d50, les $t_{pH=9}$ et les $\tau_{83}$ des différente chaux éteintes mises en oeuvre sont repris au tableau 1 ci-dessous. Par $t_{pH=9}$, il faut entendre le temps nécessaire à une chaux donnée pour élever le pH de la boue traitée jusqu'à une valeur de 9. Dans ce tableau, les teneurs en matière sèche obtenues après filtration de la boue non chaulée sont désignées par S1 et de la boue chaulée par S2. Les gains en siccité (MS = matière sèche) induits par le chaulage ont été déterminés au moyen de la méthode décrite ci-dessus. Enfin, les fractions égouttées sont désignées par $X_{égout}$. Il faut noter qu'une fraction égouttée de 0,6 a été obtenue pour la boue floculée, non chaulée.

Tableau 1

| Echantillon | 1 | 2 | 3 | 4 | 5 | 6 |
|---|---|---|---|---|---|---|
| Limites granulométriques (µm) | 20-45 | 45-80 | 80-200 | 200-400 | 400-1000 | >400 |
| d50 (µm) | 4 | 59 | 119 | 235 | 550 | 748 |
| $t_{pH=9}$(s) | <5 | 20 | 36 | 53 | 80 | 551 |
| $\tau_{63}$(s) | 12 | 80 | 180 | 350 | 800 | 1010 |
| S1(%) | 15,5 | 15,5 | 14,9 | 14,9 | 14,9 | 14,9 |
| S2(%) | 17,5 | 20,8 | 21,4 | 22 | 22 | 22,4 |
| Gains en MS (% relatifs) | -17,3 | 2 | 8,9 | 12 | 12 | 14 |
| $X_{égout}$ | 0,50 | 0,49 | 0,63 | 0,63 | 0,61 | 0,63 |

Ainsi qu'il ressort clairement de ce tableau, une teneur en matière sèche augmentée et quasi constante est obtenue à partir des échantillons 4 à 6 et des gains en siccité et des valeurs d'égouttage très satisfaisants sont déjà atteints avec l'échantillon 3.

Exemple 5 - Filtration d'une boue conditionnée au moyen d'un floculant organique cationique usuel et de lait de chaux à fines particules, le lait de chaux étant ajouté après le floculant

Une boue d'épuration épaissie a été floculée, chaulée et puis filtrée suivant le protocole décrit dans l'exemple 3, le chaulage ayant été réalisé cette fois en utilisant un lait de chaux réalisé selon l'exemple 2.

Afin de pouvoir évaluer l'influence du chaulage sur la teneur en matière sèche du gâteau de filtration, dans un deuxième essai la même boue a été floculée et puis filtrée suivant le protocole décrit dans l'exemple 3 mais cette fois l'étape de chaulage n'a pas été réalisée. Les gains en siccité et les $X_{égout}$ ont été déterminés comme décrits dans cet exemple. Une teneur en matière sèche de 16,4 % a été obtenue pour le gâteau de boue non chaulée alors que le gâteau de boue chaulée présentait une teneur en matière sèche de 19,1 %. Ce qui représente une perte en siccité d'environ -11 % en relatif. La fraction d'eau égouttée, lorsque la boue a été chaulée est de 0,47, alors que, dans le cas de la boue non chaulée, cette fraction vaut 0,61.

On peut donc remarquer, dans le cas de l'utilisation d'une chaux très réactive, de mauvaises propriétés d'égouttage et donc probablement une défloculation et bien sûr une perte en siccité, ce qui est à l'opposé du but poursuivi.

Exemple 6 - Filtration d'une boue conditionnée au moyen d'un floculant organique cationique usuel et de chaux éteinte à faible réactivité, la chaux étant ajoutée avant le floculant

On introduit dans un récipient d'un litre une quantité de boue d'épuration épaissie correspondant à 20 g de matière sèche. Cet échantillon de boue est alors traité selon la procédure suivante :

*La préparation de la solution aqueuse de floculant :*

La solution aqueuse de floculant est préparée comme dans l'exemple 3.

*Le chaulage :*

On ajoute à la boue épaissie une quantité de chaux éteinte, préparée suivant l'exemple 1. La quantité de chaux éteinte mise en oeuvre est ajustée en vue d'ajouter à la boue un poids de chaux éteinte correspondant à environ 40 % de sa matière sèche initiale. Le mélange ainsi obtenu est agité durant environ 10 secondes à une vitesse d'environ 200 tours par minute au moyen du floculateur de laboratoire. A chaque étape de l'opération de chaulage le récipient est pesé en vue de déterminer de manière précise le taux de chaulage appliqué.

*La floculation :*

Environ 20 ml de solution aqueuse de floculant sont ajoutés au moyen d'une seringue à la boue chaulée 25 secondés après l'addition de la chaux. Le mélange boue/floculant est alors agité durant environ 6 secondes à l'aide d'un floculateur de laboratoire à une vitesse de 300 tours par minute.

*La filtration :*

La filtration est effectuée comme décrit dans l'exemple 3.
Afin de pouvoir évaluer l'influence du chaulage sur la teneur en matière sèche du gâteau de filtration, dans un deuxième essai la même boue épaissie a été floculée et puis filtrée suivant le protocole décrit ci-dessus mais cette fois l'étape de chaulage n'a pas été réalisée. Une teneur en matière sèche de 16,5 % a été obtenue pour le gâteau de boue non chaulée alors que le gâteau de boue chaulée présentait une teneur en matière sèche de 25,8 %, ce qui représente un gain en siccité d'environ 19,3 % en relatif. La fraction d'eau égouttée lorsque la boue a été chaulée est de 0,663 alors que, dans le cas de boue non chaulée, cette fraction vaut 0,648.

Exemple 7 - Filtration d'une boue conditionnée au moyen d'un floculant organique et de chaux vive surcuite, la chaux étant ajoutée simultanément au floculant.

On introduit dans un récipient d'un litre une quantité de boue d'épuration épaissie correspondant à 20 g de matière sèche. Cet échantillon de boue est alors floculé selon la procédure suivante :

*La préparation de la solution aqueuse de floculant :*

La solution aqueuse de floculant est préparée comme dans l'exemple 3.

*La floculation et le chaulage :*

Environ 20 ml de solution aqueuse de floculant sont ajoutés au moyen d'une seringue à la boue. Simultanément on ajoute un poids de chaux vive surcuite (T60 = 28,8 minutes) correspondant à environ 30 % de la matière sèche initiale de la boue. Le mélange boue épaissie/floculant/chaux est alors agité durant environ 6 secondes à l'aide d'un floculateur de laboratoire courant à une vitesse de 300 tours par minute.

*La filtration :*

La filtration est effectuée comme dans l'exemple 3.

Afin de pouvoir évaluer l'influence du chaulage sur la teneur en matière sèche du gâteau de filtration, dans un deuxième essai la même boue épaissie a été floculée et puis filtrée suivant la protocole décrit ci-dessus mais cette fois l'étape de chaulage n'a pas été réalisée. Le gain en siccité a été déterminé comme décrit ci-dessus, le taux de chaux éteinte utilisé étant de 38.9%.

Une teneur en matière sèche de 15,3 % a été obtenue pour le gâteau de boue non chaulée alors que le gâteau de boue chaulée présentait une teneur en matière sèche de 20,9 %. Ce qui représente un gain en siccité d'environ 4,2 % en relatif.

Exemple 8 - Filtration d'une boue conditionnée au moyen d'une solution d'un floculant organique cationique et d'une chaux vive défillérisée, la chaux étant ajoutée simultanément au floculant

Une filtration de boue d'épuration, floculée et chaulée au moyen d'une chaux vive dont les particules d'une dimension inférieure à 250 μm ont été enlevées, a été réalisée suivant la procédure décrite dans l'exemple 7. Afin de pouvoir évaluer l'influence du chaulage sur la teneur en matière sèche du gâteau de filtration, dans un deuxième essai, la même boue épaissie a été floculée et puis filtrée suivant le protocole décrit ci-dessus mais cette fois l'étape de chaulage n'a pas été réalisée. Le gain en siccité a été déterminé tel que décrit ci-dessus, le taux de chaux éteinte utilisé étant de 38,7 %.

Une teneur en matière sèche de 18,1 % a été obtenue pour le gâteau de boue non chaulée alors que le gâteau de boue chaulée présentait une teneur en matière sèche de 25,7 %. Ce qui représente un gain en siccité d'environ 8,3 % en relatif.

Au cours de l'expérience dans laquelle la boue a été chaulée, la boue présentait un pH de 6,96 avant rajout de chaux. Le pH de la boue chaulée juste avant la filtration était de 8,8, le pH du filtrat obtenu valait 9,7, et celui de la boue chaulée déshydratée était de 12,5 environ un quart d'heure après la déshydratation.

Exemple 9 - Filtration d'une boue conditionnée au moyen d'une solution d'un floculant organique cationique et d'une chaux éteinte de faible réactivité, la chaux étant ajoutée simultanément au floculant

Une filtration de boue d'épuration floculée et chaulée, au moyen d'une chaux éteinte à faible réactivité, a été réalisée suivant la procédure décrite dans l'exemple 7. Afin de pouvoir évaluer l'influence du chaulage sur la teneur en matière sèche du gâteau de filtration, dans un deuxième essai la même boue épaissie a été floculée et puis filtrée suivant le protocole décrit ci-dessus mais cette fois l'étape de chaulage n'a pas été réalisée. Le gain en siccité a été déterminé tel que décrit ci-dessus, le taux de chaux éteinte utilisé étant de 37,5 %.

Une teneur en matière sèche de 18,1 % a été obtenue pour le gâteau de boue non chaulée alors que le gâteau de boue chaulée présentait une teneur en matière sèche de 24,9 %. Ce qui représente un gain en siccité d'environ 5,8 % en rotatif.

Au cours de l'expérience dans laquelle la boue a été chaulée, la boue présentait un pH de 7,01 avant l'ajout de chaux. Le pH de la boue chaulée juste avant la filtration était de 9,2, le pH du filtrat obtenu valait 9,5, et celui de la boue chaulée déshydratée était de 12,6 environ un quart d'heure après la déshydratation.

Il doit être entendu que la présente invention n'est en aucune façon limitée aux modes de réalisation décrits ci-dessus et que bien des modifications peuvent y être apportées dans le cadre des revendications annexées.

**Revendications**

**1.** Procédé de conditionnement de boues comprenant

- une addition aux boues de chaux, avec augmentation de pH,
- une addition aux boues d'au moins un composant organique floculant, et
- une floculation des boues,

**caractérisé en ce que** les boues à conditionner présentent un pH inférieur à 8 et ladite augmentation de pH comprend une première augmentation à une valeur inférieure à un pH à partir duquel a lieu une dégradation dudit au moins un composant organique floculant, et une poursuite d'augmentation de pH au-delà dudit pH à partir duquel a lieu ladite dégradation,

et **en ce que** la chaux ajoutée est une chaux choisie parmi le groupe constitué de chaux sous forme vive, sous forme éteinte pulvérulente, ou sous forme éteinte en suspension dans une phase aqueuse, présentant des particules ayant un d50 d'au moins 50 μm, de chaux vive surcuite, de chaux vive contenant un additif fluide présentant un pouvoir d'agglomération des particules fines, de chaux vive contenant un agent retardateur d'hydratation, de chaux éteinte présentant des particules élémentaires agglomérées, de chaux éteinte additionnée d'un agent ralentisseur d'activité, de chaux éteinte présentant une teneur en matière sèche supérieure à 20 % en poids et de chaux défillérisée, cette chaux présentant une réactivité donnant lieu à ladite première augmentation de pH, pendant la floculation, et à ladite poursuite d'augmentation de pH, après la fin de la floculation.

2. Procédé suivant la revendication 1, **caractérisé en ce que** l'addition de chaux a lieu préalablement à l'addition d'au moins un composant organique floculant.

3. Procédé suivant la revendication 1, **caractérisé en ce que** l'addition de chaux a lieu simultanément à l'addition d'au moins un composant organique floculant.

4. Procédé suivant la revendication 1, **caractérisé en ce que** l'addition de chaux a lieu après l'addition d'au moins un composant organique floculant.

5. Procédé suivant l'une des revendications 1 à 4 **caractérisé en ce que** la chaux ajoutée présente une réactivité donnant lieu, pendant la floculation, à une augmentation de pH à une valeur inférieure à 9.

6. Procédé suivant la revendication 5, **caractérisé en ce que** le temps nécessaire pour atteindre un pH de 9 après l'addition de chaux est d'au moins 20 secondes.

7. Procédé suivant l'une quelconque des revendications 1 à 6, **caractérisé en ce que** la chaux ajoutée est une composition répondant à la formule $[xCaO.(1-x)MgO]yH_2O$, où x a une valeur de 0,5 à 1, et y une valeur de 0 à 1, éventuellement additionnée d'au moins un adjuvant.

8. Procédé suivant l'une des revendications 1 à 7 **caractérisé en ce que** la chaux ajoutée présente des particules ayant un d50 d'au moins 100 μm, de préférence d'au moins 200 μm.

9. Procédé suivant l'une quelconque des revendications 1 à 8, **caractérisé en ce que** les boues à conditionner sont choisies parmi le groupe comprenant des boues d'épuration de traitement des eaux, des boues de dragage et des boues acides.

10. Procédé suivant l'une quelconque des revendications 1 à 9, **caractérisé en ce qu'**il comprend une séparation entre phase solide et phase liquide de la boue floculée, chaulée.

11. Procédé suivant la revendication 10, **caractérisé en ce que** la séparation est effectuée au moyen d'une filtration ou d'une centrifugation.

12. Procédé suivant l'une ou l'autre des revendications 10 et 11, **caractérisé en ce que** ladite séparation a lieu approximativement avant que le pH n'atteigne ladite valeur provoquant une dégradation du composant organique floculant appliqué, et **en ce que**, après cette séparation, la phase liquide présente ce pH et la phase solide effectue ladite poursuite d'augmentation du pH à ladite valeur supérieure.

**Patentansprüche**

1. Verfahren zur Konditionierung von Schlämmen, umfassend

- Zugabe zu den Schlämmen von Kalk, unter Erhöhung des pH-Wertes,
- Zugabe zu den Schlämmen mindestens eines organischen Flockungsmittels, und
- Ausflocken der Schlämme,

**dadurch gekennzeichnet, dass** die zu konditionierenden Schlämme einen pH-Wert von weniger als 8 aufweisen, und die Erhöhung des pH-Wertes eine erste Erhöhung bis zu einem Wert, der unter einem pH-Wert liegt, von dem an eine Zersetzung des mindestens einen organischen Flockungsmittels stattfindet, und eine darauf folgende Erhöhung des pH-Wertes, über den pH-Wert hinaus, an dem die Zersetzung stattfindet, umfasst,

und dadurch, dass der zugegebene Kalk ein Kalk ist, der aus Kalk in gebrannter Form, in pulverisierter gelöschter Form oder in gelöschter Form in Suspension in einer wässrigen Phase, der Teilchen mit einem d50 von mindestens 50 μm aufweist, aus totgebranntem Kalk, gebranntem Kalk, der einen flüssigen Zusatzstoff enthält, der feine Teilchen zu agglomerieren vermag, gebranntem Kalk, der einen Hydratisierungsverzögerer enthält, gebranntem Kalk, der agglomerierte Primärteilchen aufweist, gebranntem Kalk, dem ein die Aktivität herabsetzendes Mittel beigemengt ist, gelöschtem Kalk, der einen Trockensubstanzgehalt von 20 Gew.-% aufweist und von Füllstoffen befreitem Kalk ausgewählt ist, wobei dieser Kalk eine Reaktivität aufweist, die zu der ersten Erhöhung des pH-Wertes während des Ausflockens und der darauf folgenden Erhöhung des pH-Wertes nach dem Ende des Ausflockens führt.

2.  Verfahren gemäß Anspruch 1, **dadurch gekennzeichnet, dass** die Zugabe des Kalks vor der Zugabe mindestens eines organischen Flockungsmittels erfolgt.

3.  Verfahren gemäß Anspruch 1, **dadurch gekennzeichnet, dass** die Zugabe des Kalks gleichzeitig mit der Zugabe mindestens eines organischen Flockungsmittels erfolgt.

4.  Verfahren gemäß Anspruch 1, **dadurch gekennzeichnet, dass** die Zugabe des Kalks nach der Zugabe mindestens eines organischen Flockungsmittels erfolgt.

5.  Verfahren gemäß einem der Ansprüche 1 bis 4, **dadurch gekennzeichnet, dass** der zugegebene Kalk eine Reaktivität aufweist, die während des Ausflockens zu einer Erhöhung des pH-Wertes auf einen Wert von weniger als 9 führt.

6.  Verfahren gemäß Anspruch 5, **dadurch gekennzeichnet, dass** die Zeit, die nötig ist, um nach der Zugabe von Kalk einen pH-Wert von 9 zu erreichen, mindestens 20 Sekunden beträgt.

7.  Verfahren gemäß einem der Ansprüche 1 bis 6, **dadurch gekennzeichnet, dass** der zugegebene Kalk eine Verbindung der Formel $[xCaO·(1-x)MgO]yH_2O$ darstellt, wobei x einen Wert von 0,5 bis 1 und y einen Wert von 0 bis 1 aufweist, gegebenenfalls kombiniert mit mindestens einem Zusatzstoff.

8.  Verfahren gemäß einem der Ansprüche 1 bis 7, **dadurch gekennzeichnet, dass** der zugegebene Kalk Teilchen mit einem d50 von mindestens 100 μm, vorzugsweise von mindestens 200μm, aufweist.

9.  Verfahren gemäß einem der Ansprüche 1 bis 8, **dadurch gekennzeichnet, dass** die zu konditionierenden Schlämme aus Klärschlämmen der Wasseraufbereitung, Baggerschlämmen und sauren Schlämmen ausgewählt sind.

10. Verfahren gemäß einem der Ansprüche 1 bis 9, **dadurch gekennzeichnet, dass** es eine Trennung der festen Phase und der flüssigen Phase des ausgeflockten, mit Kalk behandelten Schlamms umfasst.

11. Verfahren gemäß Anspruch 10, **dadurch gekennzeichnet, dass** die Trennung mittels Filtration oder Zentrifugation erfolgt.

12. Verfahren gemäß einem der Ansprüche 10 oder 11, **dadurch gekennzeichnet, dass** die Trennung in etwa bevor der pH-Wert den Wert erreicht, der eine Zersetzung des eingesetzten organischen Flockungsmittels hervorruft, erfolgt, und dadurch, dass nach der Trennung die flüssige Phase diesen pH-Wert aufweist und die feste Phase die darauf folgende Erhöhung des pH-Werts bis zu dem höheren Wert erfährt.

**Claims**

1.  Method of conditioning sludge, comprising:

    -   an addition of lime to the sludge, with an increase in pH;
    -   an addition of at least one flocculating organic compound to the sludge; and
    -   a flocculation of the sludge;

**characterized in that** the sludge to be conditioned has a pH of less than 8 and the said increase in pH comprises a first increase to a value of less than a pH above which degradation of the said at least one flocculating organic compound degrades, and a continuation in which the pH is increased beyond the said point pH above which the said degradation takes place, and **in that** the added lime is a lime chosen from the group consisting of quick lime, powdered slaked lime or slaked lime in suspension in an aqueous phase, having particles with a $d_{50}$ of no less than 50 μm, overburnt quick lime, quick lime containing a fluid additive having a capability of making the fine particles agglomerate, quick lime containing a hydration retarder, slaked lime having agglomerated elementary particles, slaked lime to which an activity retarder has been added, slaked lime having a solids content of greater than 20% by weight, and fines-free lime, this lime having a reactivity that gives rise to the said first increase in pH, during the flocculation, and to the said continuation in increase in pH, after the end of the flocculation.

2. Method according to Claim 1, **characterized in that** the addition of lime takes place prior to the addition of at least one flocculating organic compound.

3. Method according to Claim 1, **characterized in that** the addition of lime takes place simultaneously with the addition of at least one flocculating organic compound.

4. Method according to Claim 1, **characterized in that** the addition of lime takes place after the addition of at least one flocculating organic compound.

5. Method according to one of Claims 1 to 4, **characterized in that** the added lime has a reactivity that gives rise, during flocculation, to an increase in the pH to a value of less than 9.

6. Method according to Claim 5, **characterized in that** the time needed to reach a pH of 9 after the addition of lime is at least 20 seconds.

7. Method according to any one of Claims 1 to 6, **characterized in that** the added lime is a composition satisfying the formula $[xCaO. (1-x)MgO]yH_2O$, where x has a value of 0.5 to 1 and y a value from 0 to 1, at least one adjuvant being optionally added thereto.

8. Method according to one of Claims 1 to 7, **characterized in that** the added lime is in the form of particles having a $d_{50}$ of at least 100 μm, preferably at least 200 μm.

9. Method according to any one of Claims 1 to 8, **characterized in that** the sludge to be conditioned is chosen from the group consisting of purification sludge from water treatment, dredging sludge and acid sludge.

10. Method according to any one of Claims 1 to 9, **characterized in that** it includes a separation between solid phase and liquid phase of the flocculated and lime-treated sludge.

11. Method according to Claim 10, **characterized in that** the separation is carried out by means of filtration or centrifugation.

12. Method according to either of Claims 10 and 11, **characterized in that** the said separation takes place approximately before the pH reaches the said value causing degradation of the applied flocculating organic compound and **in that**, after this separation, the liquid phase has this pH and the solid phase causes the said continuation in the increase in pH up to the said upper value.